# EUROPÄISCHE PATENTSCHRIFT

(11) **EP 2 863 134 B1**
(45) Veröffentlichungstag und Bekanntmachung des Hinweises auf die Patenterteilung: **06.06.2018**
(21) Anmeldenummer: 13188789.5
(22) Anmeldetag: 15.10.2013
(51) Int. Cl.: F24D 19/10, G05D 23/19, F04D 15/00

(54) **Verfahren zum Anpassen einer Heizkurve**
Method for adjusting a heating curve
Procédé d'adaptation d'une courbe de chauffe

(43) Veröffentlichungstag der Anmeldung: 22.04.2015
(73) Patentinhaber: Grundfos Holding A/S, 8850 Bjerringbro (DK)
(72) Erfinder: Blad, Thomas, 8850 Bjerringbro (DK)
(74) Vertreter: Patentanwälte Vollmann & Hemmer

(56) Entgegenhaltungen:
- EP-A1- 1 933 097
- AT-B- 397 854
- DE-A1- 3 620 929
- DE-A1- 4 312 150
- DE-A1- 10 163 987
- DE-A1-102008 054 043
- DE-C1- 2 940 790

## Beschreibung

Die Erfindung betrifft ein Verfahren zum Anpassen der Steuerung der Vorlauftemperatur einer Heizungsanlage an das zu beheizende Gebäude, mit den im Oberbegriff des Anspruchs 1 angegebenen Merkmalen.

Heizungsanlagen weisen heutzutage unabhängig von der Art der Wärmeerzeugung eine Steuerung auf, die die Vorlauftemperatur des im Kreislauf geführten Wärmeträgermediums, typischerweise Wasser, einstellt. Als Vorlauftemperatur bezeichnet man die Temperatur, mit der das Wärmeträgermedium in die Heizungsanlage eintritt. Bei modulierend angesteuerten Brennern erfolgt der Eintritt des aus einem Primärwärmetauscher kommenden und dort erhitzten Wärmeträgermediums typischerweise direkt in die Heizungsanlage, bei nicht modulierenden Brennern durch Zwischenschaltung eines Mischerventils, welches dem aus dem Primärwärmetauscher kommenden Wärmeträgermedium bedarfsweise abgekühltes Wasser aus dem Rücklauf beimischt. Dieses Verfahren ist unabhängig von der Art der Energieumwandlung, wird also bei Gas-, Öl-, Pellet- oder anderen Heizungsanlagen eingesetzt. Dabei ist innerhalb der Steuerung der Heizungsanlage eine Heizkurve implementiert, welche den Zusammenhang zwischen typischerweise der Außentemperatur des Gebäudes und der für einen Heizkreis zugehörigen Vorlauftemperatur bestimmt. Diese Heizkurve wird in der Regel vom Installateur nach Einbau der Anlage eingestellt, sie kann in ihrer Steilheit eingestellt werden, sowie parallelverschoben werden. Die Parallelverschiebung bewirkt eine Anhebung bzw. Absenkung der Vorlauftemperatur unabhängig von der Außentemperatur, wohingegen die Veränderung der Steilheit die Abhängigkeit der Außentemperatur zur Vorlauftemperatur verändert. Je steiler die Heizkurve ist, desto mehr nimmt die Vorlauftemperatur bei fallender Außentemperatur zu, mit flacher werdender Heizkurve erfolgt eine Anpassung in umgekehrter Richtung. Ein den Stand der Technik repräsentierendes Verfahren ist im Dokument AT 397 854 B offenbart. Dieses Dokument zeigt den Oberbegriff des Anspruchs 1. Da die Heizkurve üblicherweise mit Installation der Heizungsanlage vom Installateur manuell eingestellt wird, erfolgt eine Korrektur der Einstellung in der Regel nur bei unterversorgender Einstellung, da bei überversorgender Einstellung der Verbraucher dies in der Regel nicht bemerkt und im Übrigen die Nachjustierung durch den Heizungsinstallateur Kosten verursacht. Dies führt dazu, dass der Heizungsinstallateur die Heizkurve eher überversorgend als unterversorgend einstellt, wodurch der Gesamtwirkungsgrad der Heizungsanlage ungünstig beeinflusst ist. Darüber hinaus kann eine Überversorgung durch dann weitgehend geschlossene Thermostatventile in der Heizungsanlage zu unerwünschten Geräuschbelästigungen führen.
Vor diesem Hintergrund liegt der Erfindung die Aufgabe zugrunde, ein Verfahren zum Anpassen der Steuerung der Vorlauftemperatur einer Heizungsanlage zu schaffen, welches diese Nachteile beseitigt.
Diese Aufgabe wird gemäß der Erfindung durch ein Verfahren mit den in Anspruch 1 angegebenen Merkmalen gelöst. Darüber hinaus stellt die Erfindung eine Steuerung zur Ausführung des erfindungsgemäßen Verfahrens sowie eine Kreiselpumpe mit einer solchen Steuerung zur Verfügung. Vorteilhafte Ausgestaltungen der Erfindung sind in den Unteransprüchen und der nachfolgenden Beschreibung angegeben, hierbei können die in den Unteransprüchen und der Beschreibung angegebenen Merkmale jeweils für sich, aber auch in geeigneter Kombination die erfindungsgemäße Lösung gemäß Anspruch 1 weiter ausgestalten.

Das erfindungsgemäße Verfahren ist zum Anpassen der Steuerung der Vorlauftemperatur einer Heizungsanlage an ein zu beheizendes Gebäude oder zumindest an einem zu beheizenden Gebäudeteil vorgesehen, und zwar für eine Heizungsanlage, bei der ein Wärmeträgermedium im Kreislauf geführt wird, mit dem das Gebäude oder der Gebäudeteil mit Wärme versorgt wird, wobei der Kreislauf mindestens einen temperaturgesteuerten Heizkreis aufweist. Gemäß der Erfindung wird die Durchflussmenge des Wärmeträgermediums im Kreislauf kontinuierlich oder in zeitlichen Abständen registriert, das heißt erfasst und gespeichert, wobei die Anpassung der Steuerung der Vorlauftemperatur in Abhängigkeit der registrierten Werte selbsttätig erfolgt.

Grundgedanke des erfindungsgemäßen Verfahrens ist es, durch das Erfassen der Durchflussmenge des Wärmeträgermediums die Steuerung der Vorlauftemperatur gezielt an den Wärmebedarf des zu beheizenden Gebäudes oder Gebäudeteiles selbsttätig anzupassen. Da bei Gebäuden heutzutage thermostatgeregelte Heizkreise, beispielsweise Heizkörper mit Thermostatventilen oder Heizkreise einer Fußbodenheizung mit Thermostatregelung vorgeschrieben sind, ist die Durchflussmenge in diesen Heizkreisen im Wesentlichen wärmebedarfsgesteuert. Die Thermostatregelung sorgt dafür, dass bei einem Wärmebedarf im Raum die Zufuhr vom Wärmeträgermedium teilweise oder vollständig freigegeben wird, wohingegen beim Erreichen der voreingestellten Temperatur die Zufuhr abgesperrt oder zumindest gedrosselt wird. Bei den heute üblichen Thermostatventilen erfolgt dies mechanisch oder hydraulisch-mechanisch über die Raumtemperatur. Auch sind elektrisch gesteuerte Stellventile bekannt, die mit entsprechenden Raumtemperaturfühlern mit Steuerung wirkverbunden sind.

Gemäß der Erfindung kann allein durch Registrierung der Durchflussmengen des Wärmeträgermediums in den Kreislauf ermittelt werden, ob eine Überversorgung, Unterversorgung oder optimale Versorgung erfolgt und entsprechend eine Anpassung der Steuerung der Vorlauftemperatur der Heizungsanlage erfolgen, um auf diese Weise die Vorlauftemperatur so einzustellen, dass sie möglichst niedrig ist, um den Wirkungsgrad der Heizungsanlage insoweit zu optimieren und andererseits ausreichend hoch ist, um das Gebäude bzw. Gebäudeteile ausreichend mit Wärme zu versorgen. Dabei geht die Erfindung davon aus, dass eine optimale Versorgung dann gegeben ist, wenn die Durchflussmenge des Wärmeträgermediums im Kreislauf möglichst konstant ist, das heißt die Thermostatventile einen mittleren Öffnungsgrad aufweisen.

Grundsätzlich ist mit dem erfindungsgemäßen Verfahren eine direkte Steuerung der Vorlauftemperatur einer Heizungsanlage, zumindest eine Anpassung der Steuerung der Vorlauftemperatur möglich. Bei der Vielzahl der im Betrieb befindlichen und heute üblichen Heizungsanlagen wird die Vorlauftemperatur in einer entsprechenden Steuerung der Heizungsanlage mittels einer Heizkurve gesteuert, welche angibt, bei welcher Außentemperatur welche Vorlauftemperatur das Wärmeträgermedium haben soll. Dabei kann die Heizkurve von der Außentemperatur und/oder einer oder mehrerer anderer den Wärmebedarf des Gebäudes oder Gebäudeteils beeinflussenden Größe bestimmt sein. Für Heizungsanlagen, die eine solche Heizkurve zur Steuerung der Vorlauftemperatur aufweisen, sieht das erfindungsgemäße Verfahren eine selbsttätige Anpassung dieser Heizkurve vor.

Dabei ist es gemäß der Erfindung grundsätzlich ausreichend, nur die Durchflussmenge des Wärmeträgermediums im Kreislauf kontinuierlich oder in zeitlichen Abständen zu erfassen, vorteilhaft wird jedoch gemäß einer Weiterbildung der Erfindung auch die Außentemperatur oder die Vorlauftemperatur registriert. Die zusätzliche Temperaturregistrierung vereinfacht die Auswertung und verbessert somit die selbsttätige Anpassung. Dabei sind sowohl Außentemperatur als auch Vorlauftemperatur in einfacher Weise zu erfassen, da bei modernen Heizungsanlagen regelmäßig ein Außentemperaturfühler vorgesehen ist oder zumindest in der Heizungsumwälzpumpe ein Temperaturfühler vorgesehen ist, sodass ein solcher Temperaturwert praktisch ohne zusätzlichen Aufwand zur Verfügung steht.

Auch wenn die kontinuierliche Registrierung der Durchflussmenge und gegebenenfalls der Temperatur ein besonders genaues Ergebnis bei der Auswertung ergibt, so erfordert dies jedoch eine hohe Speicherkapazität. Insoweit günstiger ist es, gemäß einer Weiterbildung des erfindungsgemäßen Verfahrens die Registrierung der Durchflussmenge und gegebenenfalls der Temperatur in zeitlichen Abständen zwischen vorzugsweise fünf Minuten und drei Stunden durchzuführen. Hierdurch kann die Anzahl der Messwerte und damit die erforderliche Speicherkapazität für diese Werte erheblich reduziert werden, ohne im Ergebnis Nachteile befürchten zu müssen. Bekanntlich vollziehen sich Änderungen in der Heizungsanlage durch Wärmebedarfsänderungen nicht plötzlich. Selbst wenn beispielsweise ein Fenster geöffnet wird, so benötigt das davon beaufschlagte Thermostatventil eine gewisse Zeit, um dies steuerungstechnisch zu berücksichtigen. Ein Messabstand von fünf Minuten oder mehr reicht daher für das erfindungsgemäße Verfahren aus.

Um die Steuerung der Vorlauftemperatur an den aktuellen Wärmebedarf anzupassen, ist gemäß der Erfindung vorgesehen, nur eine Anzahl der zuletzt registrierten Werte auszuwerten, vorzugsweise die der letzten zwölf Stunden bis dreißig Tage.

Gemäß der Erfindung kann zur Anpassung der Heizkurve deren Steilheit verändert werden und/oder diese parallelverschoben werden. Dabei ist die Veränderung der Steilheit der Heizkurve vorgesehen, um bei jeder Außentemperatur, also von Sommer bis Winter, die Vorlauftemperatur an den Wärmebedarf des zu beheizenden Gebäudes oder Gebäudeteils anzupassen. Eine solche Veränderung der Steilheit setzt allerdings langfristig, typischerweise mindestens über den Zeitraum eines Jahres, die Registrierung und Auswertung der Durchflussmengenwerte und gegebenenfalls der Temperaturwerte voraus. Die Parallelverschiebung der Heizkurve verändert die Höhe der Vorlauftemperatur, ist also insbesondere auch zur kurzfristigen Anpassung geeignet. Eine solche Parallelverschiebung wird gegebenenfalls zur Anpassung der Steuerung der Vorlauftemperatur mittels registrierten Werten der letzten zwölf Stunden bis dreißig Tage erfolgen.

Dabei kann gemäß einer Weiterbildung der Erfindung die Anpassung der Steuerung der Vorlauftemperatur bzw. die Anpassung der Heizkurve vorteilhaft dadurch erfolgen, dass eine Verteilung der registrierten Durchflussmengenwerte erfolgt und die Verteilung statistisch ausgewertet wird. Dabei erfolgt die Auswertung vorzugsweise so, dass ein Maximalwert der Durchflussmengenwerte, ein Minimalwert der Durchflussmengenwerte und ein Mittelwert der Durchflussmengenwerte ermittelt wird, wobei der Mittelwert eine Anhäufung in der Verteilung der Durchflussmengenwerte repräsentiert, also keinen mathematischen Mittelwert sondern einen statistischen Mittelwert der Verteilung repräsentiert, welcher die höchste Anhäufung von Einzelwerten darstellt. Dabei ist hier eine gewisse statistische Auswertung sinnvoll, um herauszufinden, wo gegebenenfalls eine Häufung von Durchflussmengenwerten zwischen Minimalwert und Maximalwert vorliegt.

Wenn der Mittelwert näher am Maximalwert als am Minimalwert liegt, also die Anhäufung der Verteilung der Durchflussmengenwerte näher am Maximalwert als am Minimalwert liegt, wird gemäß der Erfindung die Vorlauftemperatur erhöht oder die Heizkurve zu höheren Vorlauftemperaturen hin verschoben und dann, wenn der Mittelwert näher am Minimalwert als am Maximalwert liegt, die Vorlauftemperatur abgesenkt oder die Heizkurve zu niedrigeren Vorlauftemperaturen hin verschoben. Diesem Korrektiv liegt die Erkenntnis zugrunde, dass die Vorlauftemperatur bzw. die Heizkurve so gewählt sein sollte, dass die Anhäufung in der Verteilung der Durchflussmengenwerte im Idealfall mittig zwischen Minimal- und Maximalwert liegen sollte, da dann davon auszugehen ist, dass das Wärmeträgermedium mit im Wesentlichen konstanter Durchflussmenge durch die Heizungsanlage gepumpt wird und somit die über den Vorlauf der Heizungsanlage eingebrachte Wärmemenge dem entspricht, was wärmebedarfsmäßig für das Gebäude erforderlich ist, sodass sich die Thermostatventile im Idealfall in einer Mittelstellung befinden, in der sie hohe Ventil- und Regelauthorität haben, der Durchflusswiderstand eher gering ist, eine Geräuschentwicklung zuverlässig vermieden und Pumpenleistung eingespart wird.

Dabei ist gemäß einer vorteilhaften Weiterbildung des erfindungsgemäßen Verfahrens vorgesehen, die Vorlauftemperatur zu erhöhen oder die Heizkurve steiler zu stellen, wenn die Verteilung der Durchflussmengenwerte über mindestens einen Jahreszeitraum zwischen Minimalwert und Maximalwert eine Anhäufung nahe dem Maximalwert aufweist. Eine solche Verteilung der Durchflussmengenwerte ergibt sich typischerweise bei zu flacher Heizkurve, da dann bei niedrigen Außentemperaturen die Vorlauftemperatur zu gering, das heißt die Thermostatventile weit geöffnet sind.

Wird hingegen über einen Jahreszeitraum die Verteilung der Durchflussmengenwerte festgestellt, welche zwei Anhäufungen zwischen dem Maximal- und dem Minimalwert aufweist, so ist gemäß der Erfindung vorgesehen, die Vorlauftemperatur abzusenken oder die Heizkurve flacher zu stellen. Eine solche Verteilung ergibt sich typischerweise bei zu steiler Heizkurve, da dann bei niedrigen Außentemperaturen die Vorlauftemperatur zu hoch ist, das heißt die Thermostatventile nahezu geschlossen sind, wohingegen bei niedrigen Außentemperaturen die Vorlauftemperatur zu niedrig, das heißt die Thermostatventile geöffnet sind.

Um die Steilheit der Heizkurve nach den vorgenannten Anhäufungskriterien zu korrigieren, ist es erforderlich, die Durchflusswerte über mindestens einen Jahreszeitraum zu erfassen. Wenn innerhalb dieses Jahreszeitraums auch eine Korrektur der Heizkurve durch Parallelverschiebung erfolgt, was gemäß der Erfindung ebenfalls vorgesehen sein kann, so muss dann gegebenenfalls die Korrektur der Steilheit der Heizkurve unter Berücksichtigung der zuvor vorgenommenen Parallelverschiebungen erfolgen. Das heißt, dass insbesondere das aufeinanderfolgende Parallelverschieben der Heizkurve zunächst nach oben und dann nach unten oder umgekehrt ein Indiz dafür ist, dass die Steilheit der Temperaturkurve nicht angepasst ist und insoweit ein Korrektiv erfolgen kann. Gemäß der Erfindung können diese Kombinationen, das heißt das Parallelverschieben der Heizkurve und die Veränderung der Steilheit durch geeignete Bedingungen festgelegt werden und typischerweise softwaremäßig in der Steuerung implementiert werden.

Erfolgt hingegen gemäß dem erfindungsgemäßen Verfahren eine unmittelbare Anpassung der Vorlauftemperatur, dann sind diese Unterscheidungen nicht erforderlich, da der Sollwert der Vorlauftemperatur mit dem erfindungsgemäßen Verfahren selbsttätig eingestellt wird und bereits nach kurzem Betrieb der Anlage optimiert ist.

Besonders vorteilhaft kann zusätzlich oder alternativ zur Verteilung der Durchflussmengenwerte die Vorlauftemperatur oder Außentemperatur mit herangezogen werden. So wird gemäß der Erfindung die Heizkurve steiler eingestellt, wenn mit ansteigender Vorlauftemperatur oder abfallender Außentemperatur die Durchflussmenge ansteigt. Diese Anpassung beruht auf der Erkenntnis, dass dann, wenn mit ansteigender Vorlauftemperatur oder abfallender Außentemperatur die Durchflussmenge ansteigt, der Wärmebedarf des Gebäudes oder Gebäudeteils noch nicht gedeckt ist, sodass die Erhöhung der Vorlauftemperatur noch nicht ausgereicht, um bei einer bevorzugten Mittelstellung der Thermostatventile den Wärmebedarf zu decken. Umgekehrt ist gemäß der Erfindung vorgesehen, die Heizkurve flacher einzustellen, wenn mit abfallender Vorlauftemperatur oder ansteigender Außentemperatur die Durchflussmenge abfällt.
Für eine kurzfristige Anpassung hingegen ist es zweckmäßig, die Heizkurve zu niedrigeren Vorlauftemperaturen hin zu verschieben, wenn mit abfallender Vorlauftemperatur oder mit ansteigender Außentemperatur die Durchflussmenge ansteigt, umgekehrt wird die Heizkurve zu höheren Vorlauftemperaturen hin verschoben, wenn mit ansteigender Vorlauftemperatur oder mit abfallender Außentemperatur die Durchflussmenge abfällt. Um in diesen Fällen unterscheiden zu können, ob die Steilheit der Heizkurve oder das Niveau der Heizkurve anzupassen sind, wird vorteilhaft zusätzlich eine statistische Auswertung der Durchflussmengenwerte erfolgen, wobei für die Steilheitskorrektur die Werte über mindestens einen Jahreszeitraum heranzuziehen sind, wohingegen zur kurzfristigen Anpassung an dem Wärmebedarf die Werte der letzten zwölf Stunden bis dreißig Tage herangezogen werden.
Das erfindungsgemäße Verfahren wird besonders vorteilhaft in die Steuerung einer das Wärmeträgermedium umwälzenden Pumpe, insbesondere Heizungsumwälzpumpe implementiert. Dann kann gemäß des erfindungsgemäßen Verfahrens die Anpassung der Steuerung der Vorlauftemperatur oder die Anpassung der Heizkurve der Heizungsanlage dadurch erfolgen, dass das Außentemperatursignal, welches der Heizungssteuerung zugeführt wird, angepasst, das heißt simuliert wird. Dann gibt die Steuerelektronik der Heizungsumwälzpumpe in Anwendung des erfindungsgemäßen Verfahrens der Steuerung der Heizungsanlage eine Außentemperatur vor, die so gewählt ist, dass die gewünschte Veränderung der Vorlauftemperatur seitens der Steuerung der Heizungsanlage generiert wird. Wenn beispielsweise mit dem erfindungsgemäßen Verfahren in der Steuerelektronik der Heizungsumwälzpumpe eine Unterversorgung festgestellt wird, so wird von der Steuerelektronik der Pumpe ein Außentemperatursignal für die Heizungssteuerung generiert, welches eine entsprechend niedrigere Temperatur als die tatsächliche Außentemperatur angibt. Hierzu ist es zweckmäßig, wenn die Steuerelektronik der Pumpe mit dem Außentemperatursignal des Temperaturfühlers der Heizungssteuerung beaufschlagt wird. Auf diese Weise kann das erfindungsgemäße Verfahren ungeachtet der verwendeten Heizungssteuerung und ohne besondere Schnittstelle für die Heizungssteuerung mittels der Steuerelektronik der Heizungsumwälzpumpe durchgeführt und mittels des abgegebenen Außentemperatursignals für die Heizungssteuerung an die Heizungssteuerung übergeben werden.

Eine Steuerung zur Ausführung des erfindungsgemäßen Verfahrens wird vorteilhaft als Teil der Steuerelektronik eines elektronischen Drehzahlstellers einer Kreiselpumpe, welche zum Umwälzen des Wärmeträgermediums in der Heizungsanlage vorgesehen ist, gebildet oder in die Steuerelektronik implementiert. Moderne Heizungsumwälzpumpen sind drehzahlgeregelt, sie weisen einen elektronischen Drehzahlsteller, insbesondere einen Frequenzumrichter auf, der es nicht nur ermöglicht, die Pumpe in einen weiten Drehzahlbereich anzutreiben, sondern der darüber hinaus einen geregelten Betrieb vorsieht. Beispielsweise kann die Pumpe mit konstantem Druck oder mit Proportionaldruck angesteuert werden, das heißt es wird eine Regelkurve erzeugt, welche konstanten Druck unabhängig von der Durchflussmenge oder im Falle der Proportionaldruckkurve eine mit wachsendem Druck ansteigende Durchflussmenge erzeugt. Hierfür ist eine umfangreiche Steuer- und Regelelektronik erforderlich, weshalb die Implementierung des erfindungsgemäßen Verfahrens in diese Steuerelektronik in der Regel ohne zusätzlichen hardwaremäßigen Aufwand und damit kostengünstig möglich ist. Dabei können vorteilhaft je nach Charakteristik der eingesetzten Motor-/Pumpenkombination im Idealfall die Durchflussmengenwerte in der Steuerelektronik des Drehzahlstellers anhand elektrischer Werte sensorlos ermittelt werden. Bei Motor-/Pumpenkombinationen, bei denen dies aufgrund der Mehrdeutigkeit bei der Zuordnung der elektrischen Werte des Motors zu den hydraulischen Werten der Pumpen nicht sensorlos möglich ist, wird gemäß der Erfindung ein Durchflusssensor oder ein Drucksensor innerhalb der Pumpe vorgesehen. Derartige Sensoren zählen zum Stand der Technik und können heutzutage kostengünstig gefertigt werden. Es wird in diesem Zusammenhang insbesondere auf die Verwendung von Vortex-Durchflussmessern hingewiesen, bei denen der Durchfluss anhand von sich hinter einem Störkörper bildenden Wirbeln ermittelt wird oder einer mit dem Drucksensor zusammenwirkenden elektronischen Auswerteeinrichtung zur Ermittlung der Durchflussmenge. Zwar ist es besonders vorteilhaft, das erfindungsgemäße Verfahren in die Steuerung der Heizungsumwälzpumpe, insbesondere die Steuerelektronik des Drehzahlstellers, Frequenzumrichters zu implementieren, jedoch kann das erfindungsgemäße Verfahren auch in einer davon unabhängigen Steuerelektronik implementiert sein, wobei es vorteilhaft ist, wenn diese Steuerelektronik zumindest eine bauliche Einheit mit der Heizungsumwälzpumpe bildet.

Weiterhin ist gemäß der Erfindung vorteilhaft zur Erfassung der Vorlauftemperatur ein Temperatursensor in der Heizungsumwälzpumpe angeordnet. Wenn pumpenseitig, was vorteilhaft ist, in der Steuerung ein Eingang für ein Signal eines Außentemperaturfühlers sowie ein Ausgang für ein Temperatursignal für die Heizungssteuerung vorgesehen sind, dann kann das erfindungsgemäße Verfahren ohne Eingriff in die Heizungssteuerung unter Verwendung der vorhandenen Gegebenheiten der Heizungsanlage nur durch Einsatz einer entsprechend ausgestatteten Heizungsumwälzpumpe durchgeführt werden, wobei lediglich der vorhandene Außentemperaturfühler der Heizungsanlage mit dem Signaleingang für den Außentemperaturfühler der Pumpensteuerung zu verbinden ist und der entsprechende Signalausgang der Pumpensteuerung mit dem Signaleingang für den Außentemperaturfühler der Heizungssteuerung zu verbinden ist. Die entsprechende Anpassung der Ansteuerung der Vorlauftemperatur bzw. der Anpassung der Heizkurve erfolgt dann durch Simulation des der Heizungsanlage zugeführten Außentemperatursignals durch die Steuerung der Pumpe.

Die Erfindung ist nachfolgend anhand von zeichnerischen Darstellungen näher erläutert. Es zeigen:
- Fig. 1: die Darstellung einer Heizkurve und deren Anpassung durch Parallelverschiebungen und Veränderungen der Steilheit,
- Fig. 2a: in schematischer Darstellung die Häufigkeitsverteilung der registrierten Durchflussmengenwerte im Heizkreislauf während eines Zeitintervalls von dreißig Tagen,
- Fig. 2b: ein Q-H-Diagramm mit einer Regelkurve und Anlagenkennlinien,
- Fig. 3: in schematischer Darstellung die Zentralheizungsanlage eines Hauses, und
- Fig. 4: in vergrößerter schematischer Darstellung eine Heizungsumwälzpumpe mit einem Temperatursignalausgang für eine Heizungssteuerung und einen Eingang für einen Außentemperaturfühler.

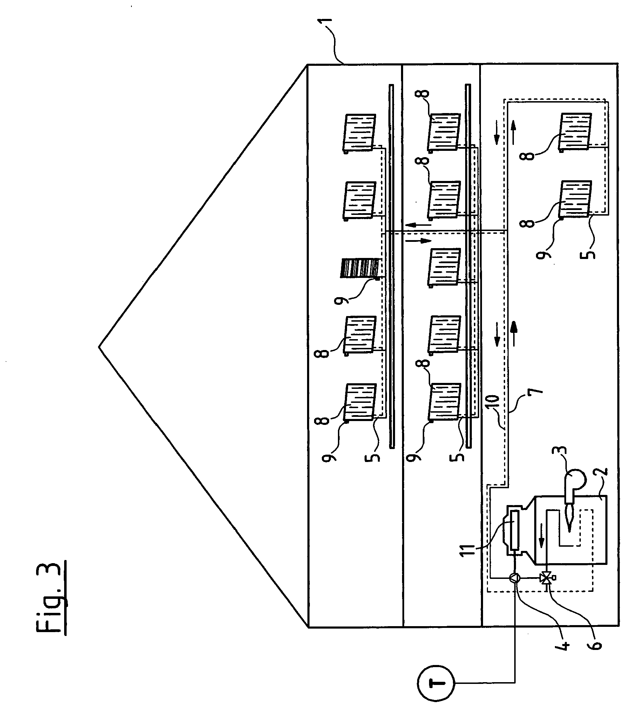

Eine typische Zentralheizungsanlage ist in Fig. 3 schematisch dargestellt. In einem Gebäude 1 ist ein Heizungskessel 2 angeordnet, in welchem mittels eines Brenners 3 in einem nicht dargestellten Primärwärmetauscher Heizwasser erhitzt wird, welches im Kreislauf geführt ist und mittels einer Heizungsumwälzpumpe 4 im Kreislauf durch die an den Kreislauf angeschlossenen Heizkreise 5 gepumpt wird. Dabei gelangt das aus dem Primärwärmetauscher austretende warme Wasser über ein Mischerventil 6 in den Vorlauf 7 der Anlage, in dem es über die Pumpe 4 den Heizkreisen 5 zugeführt wird, die jeweils einen Sekundärwärmetauscher 8 in Form eines Heizkörpers aufweisen, der über ein Thermostatventil 9 mit dem Heizkreis 5 verbunden ist.

Die Rückläufe der Heizkreise 5 münden in einem zentralen Rücklauf 10, der zum Mischerventil 6 und parallel zum Eingang des Primärwärmetauschers des Heizkessels geführt ist. Bei der dargestellten Heizungsanlage wird die Vorlauftemperatur im Vorlauf 7 durch die Temperatur des aus dem Primärwärmetauscher austretenden erwärmten Heizwassers und der Stellung des Mischerventils 6 bestimmt, wobei die Mischerventilstellung 6 und die Steuerung des Brenners 3 mittels einer Steuerung 11 im Heizungskessel 2 erfolgen, die die Vorlauftemperatur in Abhängigkeit der Außentemperatur steuert, wobei die Außentemperatur über einen Außentemperaturfühler T ermittelt wird. Bei Heizungssteuerungen nach dem Stand der Technik ist der Außentemperaturfühler T hierzu direkt mit der Steuerung des Heizungskessels verbunden.

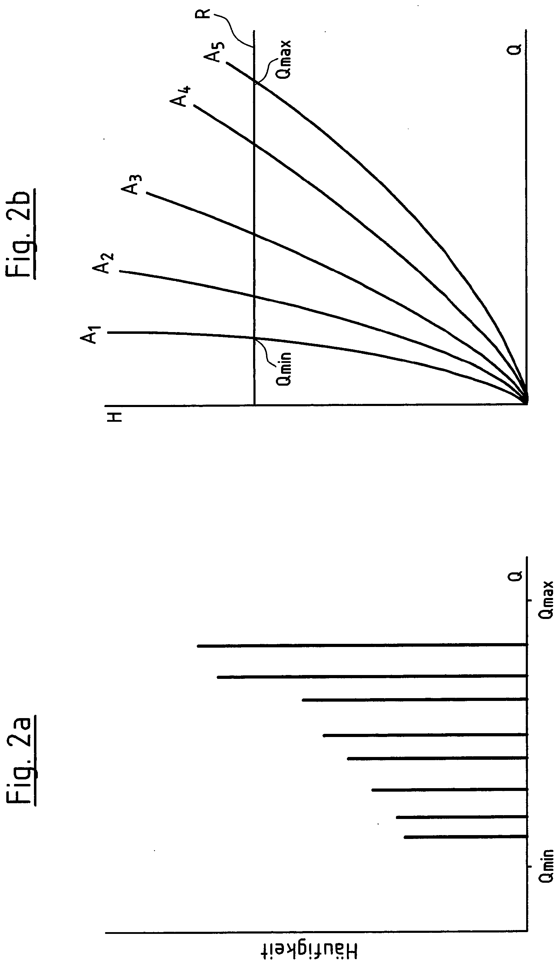

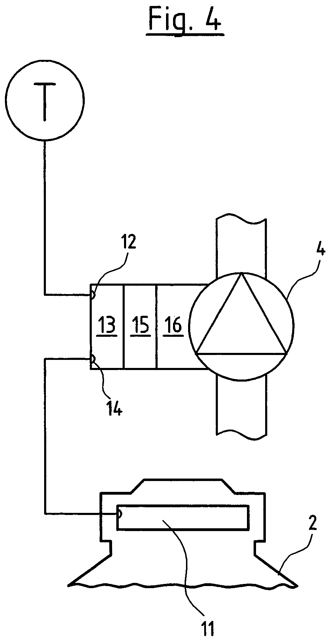

Wie Fig. 4 verdeutlicht, ist bei der erfindungsgemäßen Ausführung der Temperaturfühler T nicht mit dem Heizungskessel, sondern mit einem Signaleingang 12 einer Steuerung 13 der Heizungsumwälzpumpe 4 verbunden. Diese Steuerung 13 weist einen Signalausgang 14 auf, der mit dem Signaleingang für den Temperaturfühler T der Steuerung 11 des Heizungskessels 2 signalverbunden ist. Über den Signalausgang 14 erhält die Kesselsteuerung 11 einen durch die Steuerung 13 angepassten Temperaturwert, unter Berücksichtigung der in der Steuerung 13 durchgeführten Auswertung nach dem erfindungsgemäßen und einleitend beschriebenen Verfahren. Die Steuerung 13 bildet Teil einer Steuerelektronik 15 eines den Motor der Pumpe ansteuernden Frequenzumrichters 16. Die Steuerelektronik 15 des Frequenzumrichters 16 umfasst eine elektronische Drehzahlregelung für die Pumpe und erzeugt eine Regelkurve R (siehe Fig. 2b), mit der die Pumpe gefahren wird. Die sich einstellenden Betriebspunkte sind durch die Schnittpunkte der jeweiligen Anlagenkennlinie A1 - A5 mit der Regelkurve R gebildet. Die Anlagenkennlinie ändert sich aufgrund der sich ändernden Thermostatstellungen der Heizkreise. Die Regelkurve R ist beispielsweise eine Konstantdruckkurve, wie in Fig. 2b dargestellt, sodass sich die unterschiedlichen Betriebspunkte nur in der Durchflussmenge unterscheiden. Diese Zusammenhänge sind hinlänglich bekannt und daher hier nicht im Einzelnen beschrieben.

Die sich beim Betrieb der Heizungsanlage ergebenden Betriebspunkte werden in Zeitintervallen von fünf Minuten innerhalb der Steuerung 13 erfasst und gespeichert, wobei nach einem vorbestimmten Zeitintervall von z. B. dreißig Tagen die sich bei den jeweiligen Betriebspunkten einstellenden Durchflussmengenwerte Q verteilt und in ihrer Häufigkeit erfasst werden. Diese Erfassung ist in Fig. 2a beispielhaft dargestellt. Anhand dieser Erfassung werden ein minimaler Durchflusswert Qmin und ein maximaler Durchflusswert Qₘₐₓ ermittelt, die übrigen Durchflusswerte werden nach Häufigkeit sortiert und in einem Diagramm eingetragen bzw. elektronisch entsprechend verarbeitet. Die maximale Anhäufung von Durchflusswerten ergibt sich dort an einem Balkenpunkt 17 (in Fig. 2a), welcher nahe dem maximalen Durchflusswert Qₘₐₓ liegt.

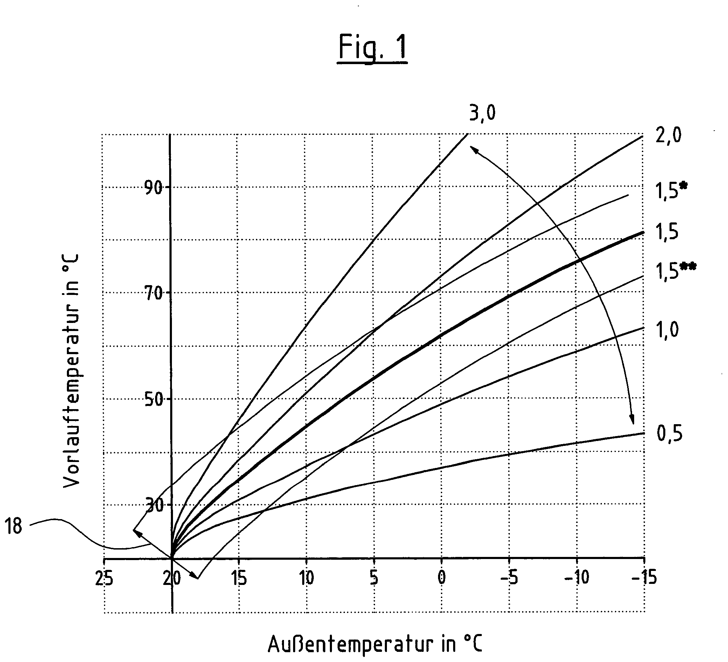

Diese Verteilung der Häufigkeiten der Durchflussmengenwerte Q lässt darauf schließen, dass die größte Anhäufung von Betriebspunkten im maximalen Durchfluss 17 liegt, was den Rückschluss zulässt, dass die Thermostatventile 9 der Heizungsanlage häufig weit geöffnet waren, was wiederum darauf schließen lässt, dass die Temperatur des im Kreislauf geführten Wassers als Wärmeträgermedium zu niedrig war. Die Steuerung 13 erhöht daher den Sollwert für die Vorlauftemperatur, was in der Heizkurve 1,5 nach Fig. 11 einer Parallelverschiebung in Richtung zu höheren Temperaturen entsprechend dem Doppelpfeil 18 entspricht. Wenn der maximale Häufungswert 17 nahe dem minimalen Durchflusswert Qₘᵢₙ liegt, erfolgt die Parallelverschiebung in entgegengesetzte Richtung, das heißt zu niedrigeren Vorlauftemperaturen hin. In dem in Fig. 1 dargestellten Heizkurvendiagramm ist die zu höheren Vorlauftemperaturen hin verschobene Heizkurve mit 1,5* und die zu niedrigeren Vorlauftemperaturen hin verschobene Heizkurve mit 1,5** gekennzeichnet. In analoger Weise kann durch Erfassen der Durchflussmengenwerte über mindestens ein Jahr die Steilheit der Heizkurve 1,5 durch die Steuerung 13 zu steileren Heizkurven 2,0 oder 3,0 hin oder zu flacheren Heizkurven 0,5 und 1,0 hin verändert werden, wie dies einleitend beschrieben ist.

Die das erfindungsgemäße Verfahren durchführende Steuerung 13 bildet eine bauliche Einheit mit der Heizungsumwälzpumpe 4. Sie erfasst die Außentemperatur über einen Außentemperaturfühler T. Da die Heizkesselsteuerung 2 üblicherweise keinen gesonderten Eingang zur Steuerung des Sollwertes der Vorlauftemperatur aufweist, diese jedoch mit dem erfindungsgemäßen Verfahren optimiert werden soll, erfolgt dies bei der Heizungsumwälzpumpe 4 durch Simulation der Außentemperatur. Hierzu wird das am Signalausgang 14 anliegenden Temperatursignal innerhalb der Steuerung 13 unter Berücksichtigung der durch den Temperaturfühler T ermittelten tatsächlichen Außentemperatur so verändert, dass die Steuerung 11 des Heizungskessels 2 die von der Steuerung 13 gemäß dem erfindungsgemäßen Verfahren anhand der Durchflussmengenwerte ermittelten optimierten Vorlauftemperatur erzeugt.

Es versteht sich, dass bei geeigneter Schnittstellenausbildung zwischen der Steuerung 11 und der Steuerung 13 auch eine direkte Anpassung des Sollwertes für die Vorlauftemperatur ohne Temperatursignalsimulation erfolgen kann.

Es kann auch vorteilhaft sein, die Steuerung 13 von der Pumpe getrennt auszubilden, dann erfolgt die Datenermittlung in der Pumpe und wird kabellos oder kabelgebunden an die Steuerung 13 übermittelt. Auf diese Weise kann die Steuerung 13 mit bestehenden frequenzumrichtergesteuerten Umwälzpumpen, z. B. des Typs Grundfos Redwolf, eingesetzt werden.

Es lässt sich auf diese Weise mit dem erfindungsgemäßen Verfahren eine Pumpe realisieren, die im Wesentlichen bei konstantem Volumenstrom betrieben wird und so ausgelegt sein kann, dass sie im Bereich ihres optimalen Wirkungsgrads läuft.

**Bezugszeichenliste**

| | | |
|---|---|---|
| 1 | - | Gebäude |
| 2 | - | Heizungskessel |
| 3 | - | Brenner |
| 4 | - | Heizungsumwälzpumpe |
| 5 | - | Heizkreise |
| 6 | - | Mischerventil |
| 7 | - | Vorlauf |
| 8 | - | Sekundärwärmetauscher |
| 9 | - | Thermostatventile |
| 10 | - | Rücklauf |
| 11 | - | Steuerung des Heizungskessels |
| T | - | Temperaturfühler |
| 12 | - | Signaleingang |
| 13 | - | Steuerung zur Anpassung der Vorlauftemperatur |
| 14 | - | Signalausgang |
| 15 | - | Steuerelektronik |
| 16 | - | Frequenzumrichter |
| 17 | - | Wert der maximalen Anhäufung |
| 18 | - | Parallelverschiebung |
| R | - | Regelkurve |
| A1 - A5 | - | Anlagenkennlinien |
| 0,5 | 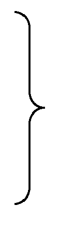 | |
| 1,0 | | |
| 1,5, 1,5*, 1,5** | | - Heizkurven |
| 2,0 | | |
| 3,0 | | |

## Patentansprüche

1. Verfahren zum Anpassen der Steuerung der Vorlauftemperatur einer Heizungsanlage an ein zu beheizendes Gebäude (1) oder zumindest einen zu beheizenden Gebäudeteil, bei dem die Heizungsanlage mittels eines im Kreislauf geführten Wärmeträgermediums das Gebäude (1) oder den Gebäudeteil mit Wärme versorgt, wobei der Kreislauf mindestens einen temperaturgesteuerten Heizkreis (5) aufweist und die Durchflussmenge des Wärmeträgermediums im Kreislauf kontinuierlich oder in zeitlichen Abständen registriert wird und die Anpassung der Steuerung der Vorlauftemperatur in Abhängigkeit der registrierten Werte selbsttätig über die Anpassung einer Heizkurve (1,5) erfolgt, welche die Vorlauftemperatur des Wärmeträgermediums in Abhängigkeit der Außentemperatur bestimmt, **dadurch gekennzeichnet, dass** die Anpassung der Steuerung der Vorlauftemperatur oder Heizkurve (1,5) der Heizungsanlage durch Anpassung des Außentemperatursignals für die Heizungssteuerung (11) in der Steuerelektronik einer das Wärmeträgermedium umwälzenden Pumpe (4) erfolgt.

2. Verfahren nach Anspruch 1, **dadurch gekennzeichnet, dass** neben der Durchflussmenge auch die Außentemperatur oder die Vorlauftemperatur registriert wird.

3. Verfahren nach einem der vorhergehenden Ansprüche, **dadurch gekennzeichnet, dass** die Registrierung der Durchflussmenge und gegebenenfalls der Temperatur in zeitlichen Abständen zwischen vorzugsweise fünf Minuten und drei Stunden erfolgt.

4. Verfahren nach einem der vorhergehenden Ansprüche, **dadurch gekennzeichnet, dass** zur Anpassung der Steuerung der Vorlauftemperatur nur eine Anzahl der zuletzt registrierten Werte ausgewertet wird, vorzugsweise die der letzten zwölf Stunden bis dreißig Tage.

5. Verfahren nach einem der vorhergehenden Ansprüche, **dadurch gekennzeichnet, dass** zur Anpassung der Heizkurve (1,5) deren Steilheit verändert und/oder diese vorzugsweise parallel verschoben wird.

6. Verfahren nach einem der vorhergehenden Ansprüche, **dadurch gekennzeichnet, dass** eine Verteilung der registrierten Durchflussmengenwerte erfolgt und die Verteilung statistisch ausgewertet wird, wobei ein Maximalwert (Qₘₐₓ) der Durchflussmengenwerte, ein Minimalwert (Qₘᵢₙ) der Durchflussmengenwerte und ein Mittelwert (17) der Durchflussmengenwerte ermittelt werden, wobei der Mittelwert eine Anhäufung in der Verteilung der Durchflussmengenwerte repräsentiert, und dann wenn der Mittelwert (17) näher am Maximalwert (Qₘₐₓ) als am Minimalwert (Qₘᵢₙ) liegt, die Vorlauftemperatur erhöht oder die Heizkurve (1,5) zu höheren Vorlauftemperaturen hin verschoben wird und dann, wenn der Mittelwert näher am Minimalwert (Qₘᵢₙ) als am Maximalwert (Qₘₐₓ) liegt, die Vorlauftemperatur abgesenkt oder die Heizkurve (1,5) zu niedrigeren Vorlauftemperaturen hin verschoben wird.

7. Verfahren nach Anspruch 6, **dadurch gekennzeichnet, dass** die Vorlauftemperatur erhöht oder die Heizkurve (1,5) steiler gestellt wird, wenn die Verteilung der Durchflussmengenwerte über mindestens einen Jahreszeitraum eine Anhäufung nahe dem Maximalwert (Qₘₐₓ) aufweist.

8. Verfahren nach einem der Ansprüche 6 oder 7, **dadurch gekennzeichnet, dass** die Vorlauftemperatur abgesenkt oder die Heizkurve (1,5) flacher gestellt wird, wenn die Verteilung der Durchflussmengenwerte über einen Jahreszeitraum zwei Anhäufungen zwischen dem Maximalwert (Qₘₐₓ) und dem Minimalwert (Qₘᵢₙ) aufweist.

9. Verfahren nach einem der vorhergehenden Ansprüche, **dadurch gekennzeichnet, dass** die Heizkurve (1,5) steiler eingestellt wird wenn mit ansteigender Vorlauftemperatur oder abfallender Außentemperatur die Durchflussmenge ansteigt.

10. Verfahren nach einem der vorhergehenden Ansprüche, **dadurch gekennzeichnet, dass** die Heizkurve (1,5) flacher eingestellt wird, wenn mit abfallender Vorlauftemperatur oder ansteigender Außentemperatur (T) die Durchflussmenge abfällt.

11. Verfahren nach einem der vorhergehenden Ansprüche, **dadurch gekennzeichnet, dass** die Heizkurve (1,5) zu höheren Vorlauftemperaturen hin verschoben wird, wenn mit ansteigender Vorlauftemperatur oder mit abfallender Außentemperatur die Durchflussmenge abfällt.

12. Verfahren nach einem der vorhergehenden Ansprüche, **dadurch gekennzeichnet, dass** die Heizkurve (1,5) zu niedrigeren Vorlauftemperaturen hin verschoben wird, wenn mit abfallender Vorlauftemperatur oder mit ansteigender Außentemperatur die Durchflussmenge ansteigt.

13. Steuerung zur Ausführung des Verfahrens nach einem der vorhergehenden Ansprüche, **dadurch gekennzeichnet, dass** die Steuerung (13) Teil der Steuerelektronik (15) eines elektronischen Drehzahlstellers (16) einer Heizungsumwälzpumpe (4) ist oder zumindest eine bauliche Einheit mit der Heizungsumwälzpumpe (4) bildet und dass ein Eingang (12) für ein Signal eines Außentemperaturfühlers (T) sowie ein Ausgangs (14) für ein Temperatursignal vorgesehen sind, wobei die Steuerung (13) Mittel zur Anpassung des ausgehenden Temperatursignals für eine Simulation der Anpassung der Vorlauftemperatursteuerung oder der Heizkurve (1,5) einer Heizungsanlage aufweist.

14. Heizungsumwälzpumpe mit einer Steuerung nach Anspruch 13, **dadurch gekennzeichnet, dass** zur Erfassung der Vorlauftemperatur ein Temperatursensor in der Heizungsumwälzpumpe (4) angeordnet ist.

15. Heizungsumwälzpumpe nach Anspruch 14, **dadurch gekennzeichnet, dass** ein Durchflussmengensensor in der Heizungsumwälzpumpe (4) vorgesehen ist.

16. Heizungsumwälzpumpe nach einem der Ansprüche 14 oder 15, **dadurch gekennzeichnet, dass** die Durchflussmenge der Pumpe sensorlos anhand elektrischer Werte eines die Pumpe antreibenden Elektromotors vorzugsweise mittels der Pumpensteuerelektronik (15) ermittelt wird.

## Claims

1. A method for adapting the control of the feed temperature of a heating facility to a building (1) to be heated or at least to a building part to be heated, concerning which the heating facility supplies the building (1) or the building part with heat by way of a heat transfer medium led in the circuit, wherein the circuit comprises at least one temperature-controlled heating circuit (5), and the flow rate of the heat transfer medium in the circuit is registered in a continuous manner or in temporal intervals and the adaptation of the control of the feed temperature is effected automatically in dependence on the registered values via the adaptation of a heating curve (1, 5) which determines the feed temperature of the heat transfer medium in dependence on the outer temperature, **characterised in that** the adaptation of the control of the feed temperature or heating curve (1, 5) of the heating facility is effected by way of adaptation of the outer temperature signal for the heating control (11) in the control electronics of a pump (4) which circulates the heat-transfer medium.

2. A method according to claim 1, **characterised in that** apart from the flow rate, the outer temperature or the feed temperature is also registered.

3. A method according to one of the preceding claims, **characterised in that** the registration of the flow rate and possibly of the temperature is effected in temporal intervals between preferably five minutes and three hours.

4. A method according to one of the preceding claims, **characterised in that** only a number of the lastly registered values are evaluated, preferably those of the last twelve hours to thirty days, for the adaptation of the control of the feed temperature.

5. A method according to one of the preceding claims, **characterised in that** for the adaptation of the heating curve (1, 5), its steepness is changed and/or this is displaced preferably in a parallel manner.

6. A method according to one of the preceding claims, **characterised in that** a distribution of the registered flow rate values is effected and the distribution is statistically evaluated, wherein a maximal value (Qₘₐₓ) of the flow rate values, a minimal value (Qₘᵢₙ) of the flow rate values and a mean value (17) of the flow rate values are determined, wherein the mean value represents a concentration in the distribution of the flow rate values, and the feed temperature is increased or the heating curve (1, 5) is displaced towards higher feed temperatures when the mean value (17) lies closer to the maximal value (Qₘₐₓ) than to the minimal value (Qₘᵢₙ), and the feed temperature is lowered or the heating curve (1, 5) is displaced towards lower feed temperatures when the mean value lies closer to the minimal value (Qₘᵢₙ) than to the maximal value (Qₘₐₓ).

7. A method according to claim 6, **characterised in that** the feed temperature is increased or the heating curve (1, 5) is set more steeply, if the distribution of the flow rate values over at least a one year time period has a concentration close to the maximal value (Qₘₐₓ).

8. A method according to one of the claims 6 or 7, **characterised in that** the feed temperature is lowered or the heating curve (1, 5) is set more shallowly, if the distribution of the flow rate values over a year time period has two concentrations between the maximal value (Qₘₐₓ) and the minimal value (Qₘᵢₙ).

9. A method according to one of the preceding claims, **characterised in that** the heating curve (1, 5) is set more steeply if the flow rate increases with an increasing feed temperature or falling outer temperature.

10. A method according to one of the preceding claims, **characterised in that** the heating curve (1, 5) is set more shallowly if the flow rate drops with a falling feed temperature or increasing outer temperature (T).

11. A method according to one of the preceding claims, **characterised in that** the heating curve (1, 5) is displaced towards higher feed temperatures if the flow rate drops with an increasing feed temperature or with a falling outer temperature.

12. A method according to one of the preceding claims, **characterised in that** the heating curve (1, 5) is displaced towards lower feed temperatures if the flow rate increases with a falling feed temperature or with an increasing outer temperature.

13. A control for carrying out the method according to one of the preceding claims, **characterised in that** the control (13) is part of the control electronics (15) of an electronic speed controller (16) of a heating circulation pump (4) or forms at least one constructional unit with the heating circulation pump (4) and that an input (12) for a signal of an outer temperature probe (T) as well as an output (14) for a temperature signal are provided, wherein the control (13) comprises means for adapting the outgoing temperature signal for a simulation of the adaptation of the feed temperature control or of the heating curve (1, 5) of a heating facility.

14. A heating circulation pump with a control according to claims 13, **characterised in that** a temperature sensor is arranged in the heating circulation pump (4) for detecting the feed temperature.

15. A heating circulation pump according to claim 14, **characterised in that** a flow rate sensor is provided in the heating circulation pump (4).

16. A heating circulation pump according to one of the claims 14 or 15, **characterised in that** the flow rate of the pump is determined without any sensor by way of electrical values of an electric motor driving the pump, preferably by way of the pump control electronics (15).

## Revendications

1. Procédé d'adaptation de la commande de la température de départ de chauffage d'une installation de chauffage à un bâtiment (1) à chauffer ou pour le moins à une partie de bâtiment à chauffer, dans laquelle l'installation de chauffage alimente le bâtiment (1) ou la partie de bâtiment en chaleur à l'aide d'un fluide caloporteur circulant dans un circuit, le circuit comprenant au moins un circuit de chauffage (5) commandé en température et le débit du fluide caloporteur dans le circuit étant enregistré de manière continue ou à des intervalles de temps et l'adaptation de la commande de la température de départ étant effectuée automatiquement par adaptation, en fonction des valeurs enregistrées, d'une courbe de chauffe (1, 5) qui détermine la température de départ du fluide caloporteur en fonction de la température extérieure, **caractérisé en ce que** l'adaptation de la commande de la température de départ ou de la courbe de chauffe (1, 5) de l'installation de chauffage est effectuée par adaptation du signal de température extérieure pour la commande de chauffage (11) dans l'électronique de commande d'une pompe (4) faisant recirculer le fluide caloporteur.

2. Procédé selon la revendication 1, **caractérisé en ce qu'**est enregistrée, outre le débit, aussi la température extérieure ou la température de départ.

3. Procédé selon l'une des revendications précédentes, **caractérisé en ce que** l'enregistrement du débit et, le cas échéant, de la température est effectué à des intervalles de temps entre, de préférence, cinq minutes et trois heures.

4. Procédé selon l'une des revendications précédentes, **caractérisé en ce que**, pour l'adaptation de la commande de la température de départ, seulement un nombre des valeurs enregistrées en dernier, de préférence celles des dernières douze heures à trente jours, est utilisé.

5. Procédé selon l'une des revendications précédentes, **caractérisé en ce que**, pour l'adaptation de la courbe de chauffe (1, 5), sa pente est modifiée et/ou la courbe est déplacée de préférence parallèlement.

6. Procédé selon l'une des revendications précédentes, **caractérisé en ce qu'**il est effectuée une répartition des valeurs de débit enregistrées et que la répartition est exploitée statistiquement, une valeur maximale (Qₘₐₓ) des valeurs de débit, une valeur minimale (Qmin) des valeurs de débit et une valeur moyenne (17) des valeurs de débit étant déterminées, la valeur moyenne représentant un amas dans la répartition des valeurs de débit et, lorsque la valeur moyenne (17) est plus proche de la valeur maximale (Qmax) que de la valeur minimale (Qmin), la température de départ étant augmentée ou la courbe de chauffe (1, 5) étant déplacée vers des températures de départ plus élevées, et ensuite, lorsque la valeur moyenne est plus proche de la valeur minimale (Qmin) que de la valeur maximale (Qmax), la température de départ étant baissée ou la courbe de chauffe (1, 5) étant déplacée vers des températures de départ plus basses.

7. Procédé selon la revendication 6, **caractérisé en ce que** la température de départ est augmentée ou la courbe de chauffe (1, 5) est rendue plus raide, lorsque la répartition des valeurs de débit présente, sur au moins un intervalle de temps d'un an, un amas proche de la valeur maximale (Qmax).

8. Procédé selon la revendication 6 ou 7, **caractérisé en ce que** la température de départ est baissée ou la courbe de chauffe (1, 5) est rendue moins raide, lorsque la répartition des valeurs de débit présente, sur un intervalle de temps d'un an, deux amas entre la valeur maximale (Qmax) et la valeur minimale (Qmin).

9. Procédé selon l'une des revendications précédentes, **caractérisé en ce que** la courbe de chauffe (1, 5) est rendue plus raide, lorsque, à température de départ croissante ou à température extérieure décroissante, le débit augmente.

10. Procédé selon l'une des revendications précédentes, **caractérisé en ce que** la courbe de chauffe (1, 5) est rendue moins raide, lorsque, à température de départ décroissante ou à température extérieure (T) croissante, le débit diminue.

11. Procédé selon l'une des revendications précédentes, **caractérisé en ce que** la courbe de chauffe (1, 5) est déplacée vers des températures de départ plus élevées, lorsque, à température de départ croissante ou à température extérieure décroissante, le débit diminue.

12. Procédé selon l'une des revendications précédentes, **caractérisé en ce que** la courbe de chauffe (1, 5) est déplacée vers des températures de départ plus basses, lorsque, à température de départ décroissante ou à température extérieure croissante, le débit augmente.

13. Commande pour la mise en oeuvre du procédé selon l'une des revendications précédentes, **caractérisée en ce que** la commande (13) est une partie de l'électronique de commande (15) d'un régulateur électronique de vitesse de rotation (16) d'une pompe de recirculation de chauffage (4) ou forme, pour le moins, une unité constructive avec la pompe de recirculation de chauffage (4), et **en ce que** sont prévues une entrée (12) pour un signal d'un capteur de température extérieure (T) et une sortie (14) pour un signal de température, la commande (13) comprenant des moyens pour l'adaptation du signal de température sortant pour une simulation de l'adaptation de la commande de la température de départ ou de la courbe de chauffe (1, 5) d'une installation de chauffage.

14. Pompe de recirculation de chauffage avec une commande selon la revendication 13, **caractérisée en ce que**, pour capter la température de départ, un capteur de température est disposé dans la pompe de recirculation de chauffage (4).

15. Pompe de recirculation de chauffage selon la revendication 14, **caractérisée en ce qu'**un capteur de débit est prévu dans la pompe de recirculation de chauffage (4).

16. Pompe de recirculation de chauffage selon l'une des revendications 14 ou 15, **caractérisée en ce que** le débit de la pompe est déterminé sans capteur à l'aide de valeurs électriques d'un moteur électrique entraînant la pompe, de préférence à l'aide de l'électronique de commande (15) de la pompe.
